(19)

**Europäisches Patentamt**

**European Patent Office**

**Office européen des brevets**

(11) **EP 3 594 677 A1**

(12) **EUROPEAN PATENT APPLICATION**

(43) Date of publication:
**15.01.2020 Bulletin 2020/03**

(21) Application number: **18382507.4**

(22) Date of filing: **08.07.2018**

(51) Int Cl.:
**G01N 29/04** *(2006.01)*    **G01H 1/16** *(2006.01)*
**G01N 29/11** *(2006.01)*    **G01N 29/22** *(2006.01)*
**G01N 29/44** *(2006.01)*    **G10K 11/00** *(2006.01)*
**G01N 29/34** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundación Tecnalia Research & Innovation**
**20009 Donostia-San Sebastian, Guipuzcoa (ES)**

(72) Inventors:
- **Aznar Lapuente, Gabriel**
 **20009 Donostia-San Sebastián (Gipuzkoa) (ES)**
- **Galarza Urigoitia, Nekane**
 **20009 Donostia-San Sebastián (Gipuzkoa) (ES)**

- **Gascón Álvarez, Jaime**
 **20009 Donostia-San Sebastián (Gipuzkoa) (ES)**
- **López German, Alberto**
 **20009 Donostia-San Sebastián (Gipuzkoa) (ES)**
- **Moreno Hernández, Eduardo**
 **20009 Donostia-San Sebastián (Gipuzkoa) (ES)**
- **Muñoz Navascues, Oscar**
 **20009 Donostia-San Sebastián (Gipuzkoa) (ES)**
- **Olite Biurrun, Jorge**
 **20009 Donostia-San Sebastián (Gipuzkoa) (ES)**
- **Rubio Botía, Jokin**
 **20009 Donostia-San Sebastián (Gipuzkoa) (ES)**
- **Rubio García, Benjamín**
 **20009 Donostia-San Sebastián (Gipuzkoa) (ES)**

(74) Representative: **Balder IP Law, S.L.**
**Paseo de la Castellana 93**
**5ª planta**
**28046 Madrid (ES)**

(54) **METHOD AND SYSTEM FOR DETECTING CRACKS IN WIND TURBINES USING ULTRASOUND**

(57)   A method comprising: providing a plurality of transducers at a first end of a shaft of a wind turbine; each transducer of the plurality of transducers: emitting a first plurality of ultrasonic pulses towards the shaft; and detecting the first plurality of ultrasonic pulses that are reflected in the shaft and that the transducer has emitted; determining the existence of a crack at least based on at least one ultrasonic pulse of the first plurality of ultrasonic pulses detected by each transducer of the plurality of transducers. Also, a system for detecting cracks in wind turbines.

EP 3 594 677 A1

## Description

## TECHNICAL FIELD

The present invention relates to the field of wind turbines. More specifically, the present invention relates to methods and systems for non-destructive determination and characterization, based on ultrasound, of cracks in wind turbines.

## STATE OF THE ART

Wind power capacity is increasing every year with the installation of new wind farms. The growing tendency of wind energy has meant that operation and maintenance costs have attracted attention.

Maintenance approaches in the wind turbine industry can be widely classified into three main groups: reactive or corrective maintenance (run to failure); preventive maintenance (time-based); and predictive maintenance (condition-based). A combination of preventive and reactive maintenance strategies (intelligent maintenance) can improve the reliability, availability, and maintainability of wind turbines while simultaneously reducing the maintenance cost.

One of the main components of wind turbines is the low-speed shaft. The low-speed shaft breaking can cause the breakage of other wind turbine components due to the generated domino effect and it can cause the collapse of the gearbox, and the costs for repairing the same are normally around 0,5 million EUR; but in the worst case, in some models, a catastrophic breakdown can occur. This breakdown not only affects to mechanical parts (rotor and blades), but also affects to safety, thereby endangering human lives.

To avoid these breakages, scheduled maintenance operations are performed, based on manual ultrasonic inspections. These operations are carried out periodically but their frequency increases according to the crack size detected, so the wind turbine stoppages also increase, with a consequent economic impact.

There have been some developments in the prior art in order to simplify such maintenance operations.

Patent document EP-2626558-B1 discloses a main shaft for a wind turbine having one or more ultrasonic probes for continuous non-destructive testing of the integrity of the shaft. It is determined that there is a crack in the shaft if the propagation time of each echo received by an ultrasonic probe is shorter than the propagation time when there is no crack.

Patent document US-8043048-B2 describes a method for monitoring a structural health of a wind turbine with a resistance sensor or an ultrasonic sensor. Based on the resistance or echo measured by the corresponding sensor, a controller determines a length of a structural crack.

The main shafts and methods proposed in the prior art do not provide sufficient information regarding the characteristics of the cracks in the wind turbines. The lack of such details oftentimes results in the necessity of carrying out maintenance on the wind turbine when the same has not arrived to an end of its remaining useful life, or it results in a failure or breakage because it the severity of the crack(s) in the wind turbine remained unknown.

There is an interest in providing methods and systems that may improve the detection and characterization of cracks in wind turbines; hence, for instance an operator may have further information regarding the number of cracks and even the severity of the same so that maintenance tasks may be carried out when the cracks pose a serious risk of breakage of the wind turbines.

## DESCRIPTION OF THE INVENTION

A first aspect of the invention relates to a method comprising:

> providing a plurality of transducers at a first end of a shaft of a wind turbine;
> each transducer of the plurality of transducers:
>
>> emitting a first plurality of ultrasonic pulses towards the shaft; and
>> detecting the first plurality of ultrasonic pulses that are reflected in the shaft and that the transducer has emitted;
>
> determining the existence of a crack at least based on at least one ultrasonic pulse of the first plurality of ultrasonic pulses detected by each transducer of the plurality of transducers.

The method makes possible to non-destructively determine existence of cracks in the shaft of the wind turbine. The method determines whether the shaft of the wind turbine has any cracks formed therein by means of a plurality of transducers that provide ultrasonic pulses. In this sense, each transducer emits a first plurality of ultrasonic pulses, detects a first plurality of ultrasonic echo pulses (which are the ultrasonic pulses the transducer has emitted and have been reflected in the shaft), and then at least one ultrasonic echo pulse of each transducer is used for a combined assessment in order to determine if there is a crack in the shaft.

When the ultrasonic waves resulting from the pulses arrive at parts of the shaft and/or the cracks in the shaft, part of the energy of the ultrasonic waves is reflected back towards the transducer that emitted the respective ultrasonic pulse; the transducer measures the reflected ultrasonic waves. Each transducer has a gain that is adjustable so, although the transducers may receive ultrasonic pulses with different intensity, an amplitude of the detected ultrasonic pulses may be modified accordingly (e.g. increased, decreased).

The existence of the crack is determined by using measurements of each transducer, particularly at least one measurement thereof per transducer of the plurality of transducers. The reflected ultrasonic waves that are detected by the respective transducer may be indicative of the existence of a crack, but the other reflected ultrasonic waves that are detected by the (another) respective transducer(s), and which were emitted by the (another) respective transducer(s), may and generally are indicative of the existence of a crack. By processing the detected pulses of the transducers it is determined whether there are cracks in the shaft. That is to say, at least one ultrasonic echo pulse of each transducer is processed and all of these at least one ultrasonic echo pulses are assessed in order to determine the existence of the crack, but it can occur that a crack is identified only with the information retrievable from the at least one ultrasonic echo pulse of one transducer or several transducers of the plurality of transducers; therefore, it is not necessary that the at least one ultrasonic echo pulses of all transducers are indicative of the existence of the crack despite the determination is based on the combined assessment.

In addition to the increased confidence that such determination provides (due to the use of ultrasonic pulses of different transducers), cracks formed in portions of the shaft whose projection on a surface of the shaft at the first end is between two transducers may also be detected. That is to say, the method makes possible to detect cracks that are in a volume in which the beams of at least two transducers overlap. Prior art methods and systems are accurate in the detection of cracks at the center-most portion of the beam of the transducer, but they have low accuracy in the detection of cracks at edges of the beam of the transducer. The method of the present disclosure, however, makes possible to detect cracks with accuracy both at the center-most portion of the beam and at the edges thereof.

At least one processor (e.g. microprocessor, microcontroller, FPGA, ASIC, etc.) carries out such determination upon receiving the detected ultrasonic pulses from each transducer.

Preferably, each transducer of the plurality of transducers emits and detects the first plurality of ultrasonic pulses when no other transducer of the plurality of transducers is emitting and detecting the respective ultrasonic pulses. Each transducer of the plurality of transducers provides more accurate data regarding the structural integrity of the shaft when no other transducer emits ultrasonic pulses that may be incorrectly detected by a different transducer and, thus, provide wrong information. The at least one processor may establish the order in which each transducer has to emit and detect ultrasonic pulses so that the operation of the transducers does not overlap in time.

Further, in some embodiments, a same emission circuitry and a same detection circuitry may be used for adjusting the signals of all the transducers. To this end, one or more multiplexers are provided for selecting a transducer of the plurality of transducers and connecting it to the emission and detection circuitries, thereby reducing costs. The at least one processor may operate the one or more multiplexers accordingly. In less preferred embodiments, there are as many emission and detection circuitries as transducers are in the plurality of transducers so that no circuitries are reused.

After detecting (each transducer) ultrasonic pulses of the first plurality of ultrasonic pulses, the signal amplitudes of the different pulses are amplified with different gains so as to ease retrieval of information therefrom. That is to say, at least some ultrasonic pulses detected by a transducer are amplified with a first gain, and at least some other ultrasonic pulses detected by the same transducer are amplified with a second gain; in some cases, more than two gains are used in the amplification of the signal amplitude of the detected ultrasonic pulses.

In some embodiments, determining the existence of a crack is based on the first plurality of ultrasonic pulses detected by each transducer of the plurality of transducers.

Preferably all the detected ultrasonic pulses are used for determining the existence of a crack since the increased number of measurements increases the reliability of the determination, thereby reducing the number of false positives.

In some embodiments, the first plurality of ultrasonic pulses comprises three or more ultrasonic pulses.

Each transducer may emit and detect three or more ultrasonic pulses (e.g. 50, 100, 200, 500, 1000 or more ultrasonic pulses) for determining the existence of cracks.

By emitting and detecting an increased number of ultrasonic pulses, a larger number of samples is provided per transducer so that the determination of the existence of cracks may be more reliable.

Further, in some cases it is also advantageous to emit and detect, for instance, more than 200, 500 or 1000 ultrasonic pulses per transducer if the shaft of the wind turbine is rotating since a rotor of the wind turbine may be measured in a plurality of axial positions and, therefore, the measurements may be made both in the compression area and in the compresionless area.

In some embodiments, the plurality of transducers are provided on a surface of the shaft at the first end such that they are evenly spaced around a rotation axis of the shaft.

Each transducer is arranged such that neighboring transducers (i.e. the transducer directly next to it in counter-clockwise direction and the transducer directly next to it in clockwise direction around the rotation axis) are at a same distance therefrom so that the detection and determination of cracks is enhanced. As the distance between transducers is minimized for the number of transducers provided, the measurements of one, several or all transducers of the plurality of transducers, which are indicative of the existence of a crack, may show the existence of the crack more accurately.

In some embodiments, the step of determining the existence of a crack comprises:

comparing a signal amplitude of each ultrasonic pulse of the first plurality of ultrasonic pulses detected by each transducer with one or more predetermined amplitude thresholds;
computing a first percentage of compared ultrasonic pulses, per each transducer, that exceed at least one of the one or more predetermined amplitude thresholds; and
determining the existence of the crack based on the computed first percentage for all transducers of the plurality of transducers.

The signal amplitude of the ultrasonic pulses corresponds to amplified signal amplitudes, and for each transducer all the detected ultrasonic pulses are compared with the predetermined amplitude threshold(s), which are configured in the at least one processor. Said threshold(s) may be established based on experimental tests for example.

The computed first percentage corresponds to the number of compared ultrasonic pulses per each transducer that exceed the threshold(s) over the total number of compared ultrasonic pulses per each transducer. Higher percentage(s) is/are indicative of the existence of cracks. By taking into account the computed first percentages of all transducers it is determined whether there are cracks within the shaft, thus having one or more computed first percentages exceeding the threshold(s) a crack may be identified.

In some of these embodiments, determining the existence of the crack based on the computed first percentage for all transducers of the plurality of transducers comprises comparing the computed first percentage with a predetermined crack confirmation threshold.

The predetermined crack confirmation threshold is configured in the at least one processor and establishes how large the computed first percentages must be in order to determine the existence of cracks, so as to avoid false positives. The predetermined crack confirmation threshold may be established based on experimental tests for example.

In some cases, the predetermined crack threshold may be lowered or increased if previously it has been determined, with the method, that a crack exists.

In some embodiments, the step of determining the existence of the crack further comprises determining a size of an existing crack based on the ultrasonic pulses for determining the existence of the crack.

The different detected ultrasonic pulses, namely ultrasonic echo pulses, that are used for determining the existence of cracks are also indicative of the size of the cracks. The reflection of the ultrasonic waves on the cracks depends upon the size thereof. Moreover, as each transducer is arranged at a different position of the first end of the shaft (on a surface thereof), the echoes detected by each transducer usually can be used for determining the size of a crack in addition to the echoes detected by other transducers. Therefore, the contribution of the measurements provided by different transducers assists in determining the size and, thus, severity of the cracks.

In some embodiments, determining the existence of a crack is further based on signal amplitude of the detected ultrasonic pulses. In some of these embodiments, determining the existence of a crack is further based on both the signal amplitude of the detected ultrasonic pulses and time elapsed between emission and detection of the ultrasonic pulses.

In some embodiments, determining the size of an existing crack is at least based on signal amplitude of the detected ultrasonic pulses for determining the existence of the crack. In some of these embodiments, determining the size of an existing crack is based on both the signal amplitude of the detected ultrasonic pulses for determining the existence of the crack and time elapsed between emission and detection of the ultrasonic pulses for determining the existence of the crack.

The time it takes for the ultrasonic pulse from its emission up to its detection by a same transducer, that is to say the propagation time (also commonly referred to as time of flight or TOF), may be indicative of the existence and even indicative of the size of the crack, but also the signal amplitude with which the ultrasonic pulse is detected may be indicative of the existence and, in many cases, the size of the crack. Additionally, the increase or reduction in signal intensity, namely signal amplitude, of the detected ultrasonic pulses may also provide additional data related to the size of the crack.

In some embodiments, determining the size of the existing crack comprises:

computing a second percentage of compared ultrasonic pulses, per each transducer and per threshold, that exceed one of the one or more predetermined amplitude thresholds, the one or more predetermined amplitude thresholds at least comprising two predetermined amplitude thresholds; and
determining the size of an existing crack based on the computed second percentages for all transducers of the plurality of transducers and for all predetermined amplitude thresholds.

At least two different predetermined amplitude thresholds are configured in the at least one processor so that in case of signal amplitudes of (amplified) detected ultrasonic pulses exceeding greater predetermined amplitude thresholds it may be determined that a bigger crack is present in the shaft, and in case of (amplified) signal amplitudes of detected ultrasonic pulses exceeding lower predetermined amplitude thresholds it may be determined that a smaller crack is present in the shaft. The two or more predetermined amplitude thresholds may be established based on experimental tests for example.

In some of these embodiments, determining the size of an existing crack based on the computed second percentages for all transducers of the plurality of transducers and for all predetermined amplitude thresholds comprises comparing the computed second percentages with a/the predetermined crack confirmation threshold.

The predetermined crack confirmation threshold is configured in the at least one processor and establishes how large the computed second percentages must be in order to confirm the determined size of existing cracks, thereby avoiding false positives.

In some embodiments, the method further comprises repeating: the steps of both emitting and detecting, each transducer of the plurality of transducers, the first plurality of ultrasonic pulses; and the step of determining the existence of the crack; the steps being repeated every time a predetermined amount of time has elapsed from a previous determination of the existence of the crack.

The steps of the method are repeated for continuous monitoring of the shaft of the wind turbine. To this end, with successive emissions and detections it may be determined the appearance of new cracks that are formed while the wind turbine is in operation, and/or the evolution of cracks already detected (i.e. determine the size of the cracks). The predetermined amount of time is configured in the at least one processor.

In some embodiments, the predetermined amount of time depends upon a determination that a crack exists. In some of these embodiments, the predetermined amount of time further depends upon a determined size of a crack.

The frequency with which the steps of the method are repeated may depend upon determinations of existing cracks and/or a size thereof (if determined). For example, when it is determined a size of a crack with the method, at the same time it may also be established the predetermined amount of time so that the steps of the method are repeated once said amount of time has elapsed. Preferably, the bigger a crack is determined to be, the lower the predetermined amount of time is so that the monitoring is more frequent. In this sense, the at least one processor may adjust the predetermined amount of time based on such assessment.

In some embodiments, the method further comprises, after the step of providing the plurality of transducers, attaching each transducer of the plurality of transducers to a surface at the first end of the shaft with a holding device and a threaded rod coupled thereto such that the transducer is pivotable around the holding device.

A pivoting capacity of the transducers makes possible to attach them reliably to the shaft, particularly to the surface thereof. The shaft may feature an irregular surface, for example owing to the operation thereof by which the shaft may be subject to hits, wearing or unbalanced rotation.

The pivoting capacity may enhance the attachment of the transducers to the surface of the shaft thereby improving the ultrasonic coupling between the transducers and the shaft; this results in a more effective emission and detection of ultrasonic pulses by the transducers. During the useful life of the transducers they may remain properly attached to the shaft owing to the holding device and threaded rod in spite of any changes on the surface of the shaft.

In some embodiments, the method further comprises, each transducer of the plurality of transducers after the step of providing the plurality of transducers:

emitting a second plurality of ultrasonic pulses towards the shaft; and
detecting the second plurality of ultrasonic pulses that are reflected in the shaft and that the transducer has emitted; and
adjusting a gain of each transducer of the plurality of transducers so that each transducer detects the second plurality of ultrasonic pulses with same amplitude.

The amplitude with which the transducers are to receive ultrasonic echo pulses may be homogenized by adjusting the gain of the transducers based on the emission and detection of the second plurality of ultrasonic pulses, which are used as reference ultrasonic echo pulses. Accordingly, differences between transducers due to manufacturing tolerances, and/or even differences between different models of transducers may be reduced by changing the gain.

Preferably, the gain is adjusted based on the detection of the received ultrasonic echo pulses when the shaft of the wind turbine does not have any relevant cracks formed therein so that the ultrasonic pulses reflect at a second end of the shaft. In this manner, the ultrasonic pulses of each transducer travel a same distance and, thus, the amplitude may be homogenized based on similar measurements.

Further, the gain may be adjusted so that the signal intensity with which the ultrasonic pulses are detected provides a sufficient signal-to-noise ratio so that any information retrievable from the detected pulses may be identified more easily.

In some embodiments, each transducer of the plurality of transducers is adapted to provide ultrasonic pulses with a beam such that a half-angle divergence thereof in a section of the beam is greater than or equal to 1,5° and less than or equal to 8,0°.

It has been found out that transducers having a broad angle beam may be useful for detecting cracks whose projection at the surface of the first end of the shaft is, for example, between two transducers of the plurality of transducers, and also useful for detecting cracks along a lengthwise dimension of the shaft. The beams of every two or more transducers may overlap at least in one portion of the shaft such that cracks may be best identified and characterized with the detections of two or more transducers.

The half-angle divergence of the beam may also be selected based on a particular portion of the shaft that it is desired to be monitored for cracks. For example, if it is known that crack formation in a shaft tends to occur in a particular portion along the length of the shaft (e.g. between position 20% and 35%, or position 30% and 40%, etc. of the entire length of the shaft measured from an end thereof), the half-angle divergence of the beam may be selected so that the combination of the beams of all transducers in that portion of the shaft covers most of it. In this sense, selecting a half-angle divergence results in selecting one model of a transducer or another as it is known by the skilled person. In some examples, the following estimating formula may be used for choosing a suitable main frequency of the ultrasonic pulses, even out of resonance, however it is readily apparent for the skilled person that other formulas could be used as well:

$$\gamma = \sin^{-1}\left(k \cdot \frac{C}{D \cdot f}\right)$$

wherein k is a constant (dimensionless) being $k_0=1,22$ for $\gamma_0$ and $k_6=0,51$ for $\gamma_6$; C is sound velocity of the steel of the shaft; D is a diameter of the piezoelectric material of the transducer; and f is main frequency of the pulse. Usually, two diameters are calculated: a diameter of the beam when the acoustic pressure is reduced by half: (6 dB): $\gamma_6$; and a diameter of the beam when the acoustic pressure is reduced to zero or almost to zero: $\gamma_0$.

In one example, the half-angle divergence of the beam is between 4,0° and 5,5° (both endpoints being included).

In some embodiments, a length of the shaft is greater than or equal to 1500 mm, and less than or equal to 3500 mm.

In some embodiments, a diameter of the shaft is greater than or equal to 200 mm, and less than or equal to 800 mm. The diameter of the shaft is measured in a body thereof, which in some cases is beyond the end of the shaft since, sometimes, the first end has a diameter larger than the diameter of the body of the shaft itself.

In some embodiments, the plurality of transducers comprises at least three transducers. In some of these embodiments, the plurality of transducers comprises eight transducers. In some of these embodiments, the plurality of transducers comprises four transducers, twelve transducers, or sixteen transducers. In some embodiments, the plurality of transducers comprises thirty-two or fewer transducers, for example sixteen transducers or twelve transducers.

In some embodiments, the method further comprises transmitting a signal to a device, the signal being indicative of a size of a crack exceeding a predetermined size threshold.

The signal may be used for operating notification means, for instance an LED corresponding to an alarm state, or a device for triggering an alarm, etc., or may be used for notifying an alarm to a user or an operator.

In some embodiments, the method further comprises transmitting a signal to a device, the signal being indicative of the determined existence and/or size of cracks. In some of these embodiments, the signal is transmitted when it is determined that a size of a crack is greater than a predetermined size threshold.

A user or an operator may be notified about the structural integrity of the shaft of the wind turbine with the signal being transmitted to a device, generally a device remote from the wind turbine, such as a computer in a control center, a portable electronic device, etc. that is communicatively coupled to the at least one processor.

In some cases the notifications only take place when the structural integrity of the shaft is such that there is a risk that the shaft may fail or break due to a large crack formed therein. The predetermined size threshold may be determined based on a size of the shaft (the criticality of cracks depends both on the size of the cracks and the size of the shaft), and may be adjusted in the at least one processor. To this end, the at least one processor triggers the signal transmission, which may take place through a wired or a wireless channel (e.g. cable connection, electrical circuit, power line communications, wireless local area network, cellular networks, etc.) when it determines that the size of a crack exceeds the predetermined size threshold.

A second aspect of the invention relates to a system comprising:

a plurality of transducers adapted to be attached to an end of a shaft of a wind turbine; and
at least one processor communicatively coupled with each transducer of the plurality of transducers;
each transducer is configured to emit a first plurality of ultrasonic pulses, and further configured to detect the first plurality of ultrasonic pulses that are reflected and that the transducer emits; and
the at least one processor is configured to determine the existence of a crack at least based on at least one ultrasonic pulse of the first plurality of ultrasonic pulses detected by each transducer of the plurality of transducers.

The system makes possible to determine whether the shaft of a wind turbine has any cracks formed therein by means of a plurality of transducers that provide ultrasonic pulses.

Preferably, the at least one processor is further configured to operate the transducers such that each transducer of the plurality of transducers emits and detects the first plurality of ultrasonic pulses when no other transducer of the plurality of transducers is emitting and detecting the respective ultrasonic pulses. That is, the at least one processor multiplexes the operation of the transducers so as to sequentially operate each of the transducers. Once the emission and detection carried out by a transducer are both finished, the at least one processor operates a different transducer of the plurality of transducers so as to perform the same tasks, and so on. The at least one processor may stop the operation of all the transducers after all of them have emitted and detected the first plurality of ultrasonic pulses, and may start to operate the same once again if the sequence is to be repeated later in order to check again the structural integrity of the shaft.

After detecting (each transducer) ultrasonic pulses of the first plurality of ultrasonic pulses, the signal amplitudes of the different pulses are amplified with different gains so as to ease retrieval of information therefrom as previously described.

In some embodiments, the system further comprises a single emission circuitry and a single detection circuitry for adjusting the emission and the detection, respectively, of each transducer of the plurality of transducers. In these embodiments, the at least one processor multiplexes the use of the emission and detection circuitries so that only the transducer that is emitting and detecting the first plurality of ultrasonic pulses is connected thereto. The reuse of the two circuitries reduces the cost of the system.

In some other embodiments, the system further comprises as many emission and detection circuitries as transducers are in the plurality of transducers.

In some embodiments, determining the existence of a crack is based on the first plurality of ultrasonic pulses detected by each transducer of the plurality of transducers.

In some embodiments, the at least two ultrasonic pulses comprises three or more ultrasonic pulses. In some examples, each transducer emits and detects e.g. 50, 100, 200, 500, 1000 or more ultrasonic pulses.

In some embodiments, the at least one processor is configured to determine the existence of a crack further based on signal amplitude of the detected ultrasonic pulses. In some of these embodiments, the at least one processor is configured to determine the existence of a crack further based on both the signal amplitude of the detected ultrasonic pulses and time elapsed between emission and detection of the detected ultrasonic pulses.

In some embodiments, the at least one processor is further configured to determine a size of an existing crack at least based on signal amplitude of the detected ultrasonic pulses for determining the existence of the crack. In some of these embodiments, the at least one processor is further configured to determine a size of an existing crack based on both the signal amplitude of the detected ultrasonic pulses for determining the existence of the crack and time elapsed between emission and detection of the detected ultrasonic pulses for determining the existence of the crack.

In some embodiments, the at least one processor is configured to determine the existence of a crack by:

comparing a signal amplitude of each ultrasonic pulse of the first plurality of ultrasonic pulses detected by each transducer with one or more predetermined amplitude thresholds;
computing a first percentage of compared ultrasonic pulses, per each transducer, that exceed at least one of the one or more predetermined amplitude thresholds; and
determining the existence of the crack based on the computed first percentage for all transducers of the plurality of transducers.

In some of these embodiments, the at least one processor is configured to determine the existence of the crack based on the computed first percentage for all transducers of the plurality of transducers by comparing the computed first percentage with a/the predetermined crack confirmation threshold.

In some embodiments, the at least one processor is configured to determine the size of the existing crack by:

computing a second percentage of compared ultrasonic pulses, per each transducer and per threshold, that exceed one of the one or more predetermined amplitude thresholds, the one or more predetermined amplitude thresholds at least comprising two predetermined amplitude thresholds; and
determining the size of an existing crack based on the computed second percentages for all transducers of the plurality of transducers and for all predetermined amplitude thresholds.

In some of these embodiments, the at least one processor is configured to determine the size of an existing crack based on the computed second percentages for all transducers of the plurality of transducers and for all predetermined amplitude thresholds by comparing the computed second percentages with a/the predetermined crack confirmation threshold.

In some embodiments, each transducer of the plurality of transducers is further configured to repeat both emission and detection of the first plurality of ultrasonic pulses, and the at least one processor is further configured to repeat determination of the existence of the crack. In these embodiments, the at least one processor is further configured to operate the transducers so that they repeat emission and detection every time a predetermined amount of time has elapsed from a determination of the existence of the crack.

The frequency with which the at least one processor instructs the transducers to repeat the emission and reception of the first plurality of ultrasonic pulses may depend upon previous determinations of existing cracks and/or a size thereof (if determined). For example, when the at least one processor determines a size of a crack, at the same time the at least one processor may also establish the predetermined amount of time so that the sequence is repeated once said amount of time has elapsed. Preferably, the at least one processor establishes a lower predetermined amount of time the bigger a crack is determined to be, therefore the monitoring is more frequent owing to the higher severity of the crack.

In some embodiments, each transducer of the plurality of transducers comprises a holding device and a threaded rod coupled thereto such that the transducer is pivotable around the holding device.

In some embodiments, each transducer of the plurality of transducers is further configured to emit a second plurality of ultrasonic pulses, and to detect the second plurality of ultrasonic pulses that are reflected and that the transducer emits; and the at least one processor is further configured to adjust a gain of each transducer of the second plurality of transducers so that each transducer detects the second plurality of ultrasonic pulses with same amplitude.

In some embodiments, each transducer of the plurality of transducers is adapted to provide ultrasonic pulses with a beam such that a half-angle divergence thereof in a section of the beam is greater than or equal to 1,5° and less than or equal to 8,0°

In some embodiments, the system further comprises the shaft of the wind turbine. In these embodiments, the plurality of transducers are provided on a surface at the end of the shaft such that they are evenly spaced around a rotation axis of the shaft.

In some embodiments, a length of the shaft is greater than or equal to 1500 mm, and less than or equal to 3500 mm.

In some embodiments, a diameter of the shaft is greater than or equal to 200 mm, and less than or equal to 800 mm. The diameter of the shaft is measured beyond the end of the shaft since, sometimes, the first end has a diameter larger than the diameter of the shaft itself.

In some embodiments, the plurality of transducers comprises at least three transducers. In some of these embodiments, the plurality of transducers comprises eight transducers. In some of these embodiments, the plurality of transducers comprises four transducers, twelve transducers, or sixteen transducers. In some embodiments, the plurality of transducers comprises thirty-two or fewer transducers, for example sixteen transducers or twelve transducers.

In some embodiments, the system further comprises means for transmitting a signal to a device. In some of these embodiments, the at least one processor is further configured to provide the signal that is indicative of a size of a crack exceeding a predetermined size threshold. In some of these embodiments, the at least one processor is further configured to provide the signal that is indicative of the determined existence and/or size of cracks. In some of these embodiments, the at least one processor is further configured to transmit the signal when it determines that a size of a crack is greater than a predetermined size threshold.

The means for transmitting a signal may be, for instance, wired or wireless communications means, e.g. cable connection, electrical circuit, power line communications, wireless local area network, cellular networks, etc.

In some embodiments, the system further comprises the wind turbine.

In some embodiments, the at least one processor is one or more of: a microprocessor, a microcontroller, an FPGA, and an ASIC.

Similar advantages as those described for the first aspect of the invention also apply to this aspect of the invention.

## BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows an exemplary wind turbine.
Figure 2 shows a surface of a shaft of a wind turbine with transducers in accordance with the present disclosure.
Figure 3 shows a method in accordance with an embodiment.
Figures 4A-4C show projections of exemplary cracks in a shaft.
Figure 5 shows a transducer arrangement in accordance with the present disclosure.
Figures 6A-6B show a transducer with a pivotable mechanism in accordance with the present disclosure.
Figure 7 diagrammatically shows a beam of a transducer in a far field zone.
Figure 8 diagrammatically shows a system in accordance with an embodiment.
Figures 9A-9B show exemplary shafts of a wind turbine.

## DESCRIPTION OF WAYS OF CARRYING OUT THE INVENTION

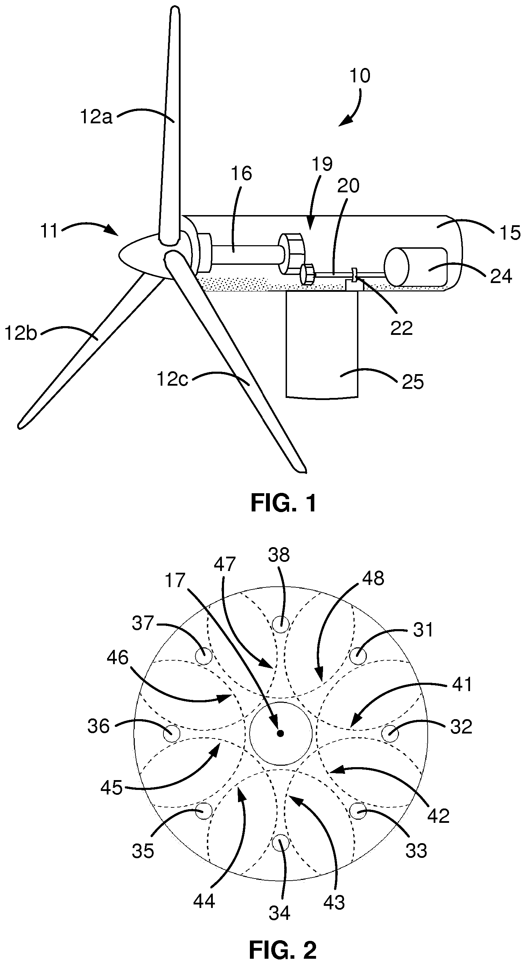

Figure 1 shows an exemplary wind turbine 10. The wind turbine 10 comprises a rotor 11, a plurality of blades 12a-12c, a nacelle 15 and a tower 25. The wind turbine 10 further comprises, within the nacelle 15 (shown transparent for illustrative purposes only), a first shaft 16 coupled to a gearbox 19, a second shaft 20 coupled to the gearbox 19, a brake 22, and a generator 24.

The first shaft 16, which is a low-speed shaft, is particularly prone to the formation of cracks therein that may result in a failure or even a breakage of the first shaft 16. In some cases, the breakage of the first shaft 16 may further result in the breakage of other components of the wind turbine 10 and/or endanger human lives.

Figure 2 diagrammatically shows, in 2D, a surface of a shaft 16 of a wind turbine 10, particularly the surface at a first end of the shaft 16.

A plurality of transducers 31-38 configured to emit ultrasonic pulses are in contact with the surface of the shaft 16. The plurality of transducers 31-38 are arranged on the surface of the shaft 16 such that they are evenly spaced around a rotation axis 17 of the shaft 16.

Each of the transducers 31-38 emits ultrasonic pulses with a respective beam 41-48 (shown with dashed lines for diagrammatically illustrating a maximum section of the beams when they reach a certain percentage of the entire length of the shaft 16). In some portions of the shaft 16 along a lengthwise dimension thereof, the beams 41-48 intersect and overlap. Accordingly, in some portions of the shaft 16 there is a volume in which two or more beams 41-48 overlap.

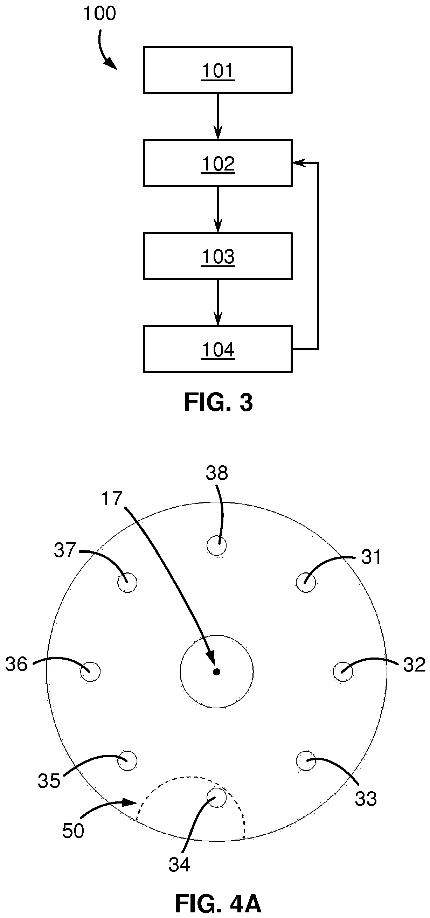

Figure 3 shows a method 100 in accordance with an embodiment.

The method 100 comprises a step of providing 101 a plurality of transducers (such as transducers 31-38 of Figure 2) at a first end of a shaft 16 of a wind turbine 10. The plurality of the transducers is attached to the shaft 16 so that they may emit ultrasonic pulses towards the shaft 16 (along a lengthwise dimension thereof) and detect the ultrasonic pulses after they have been reflected within the shaft 16.

The method 100 further comprises, for each transducer of the plurality of transducers, a step of emitting 102 a plurality of ultrasonic pulses towards the shaft 16, and a step of detecting 103 the plurality of ultrasonic pulses that are reflected in the shaft 16 that the transducer has emitted.

The method 100 further comprises determining 104 the existence of a crack in the shaft 16 at least based on at least one ultrasonic pulse of the first plurality of ultrasonic pulses detected by each transducer of the plurality of transducers, and preferably based on the first plurality of ultrasonic pulses detected by each transducer of the plurality of transducers. This step 104 is carried out once the signal amplitude of the detected ultrasonic pulses has been amplified with a variable gain, namely some detected ultrasonic pulses have one gain applied thereto, and some other detected ultrasonic pulses have another gain applied thereto. In some examples, this step 104 further comprises determining a size of an existing crack with the same ultrasonic pulses for determining the existence of the crack.

The method 100 preferably repeats the steps of emitting 102, detecting 103 and determining 104 the existence of the crack every time that certain amount of time has elapsed after the determination 104 of the existence of the crack has been carried out. The amount of time corresponds to a predetermined amount of time that may be variable, for instance it may be adjusted based on previous determinations 104 of the existence of cracks and/or the size thereof.

Figures 4A-4C show illustrative projections of exemplary cracks 50-52 (shown with dashed lines for illustrative purposes only) in a shaft 16, particularly a projection thereof on a surface at an end of the shaft 16 where a plurality of transducers 31-38 are attached to the shaft 16 for ultrasonic coupling thereof. The plurality of transducers 31-38 are evenly distributed around a rotation axis 17 of the shaft 16. The exemplary cracks 50-52 are formed in portions along the length of the shaft 16; these portions may be at a distance from the surface of the shaft 16 where the transducers 31-38 are attached.

In Figure 4A there is shown an illustrative projection of a first crack 50 that is in front of a first transducer 34. The first crack 50 may be within the beam of the first transducer 34, and also within the beam of other transducers, for example the beam of a second transducer 35 and the beam of a third transducer 33, and even the beam of further transducers, depending on the size of the respective beams.

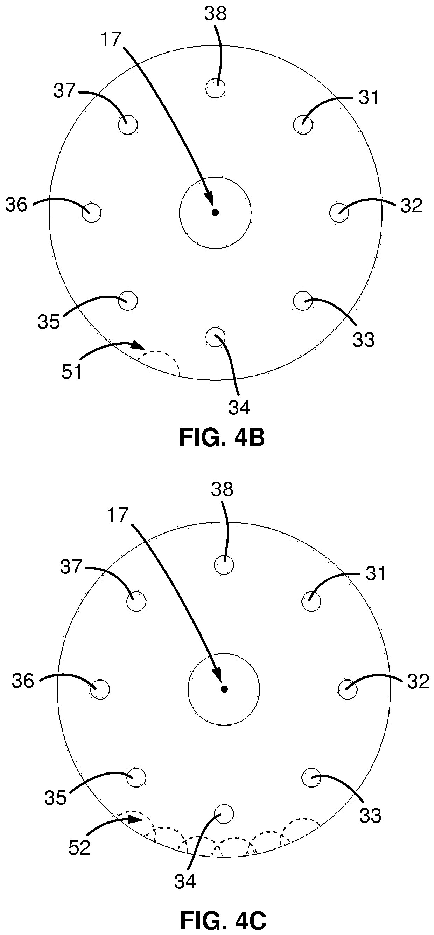

In Figure 4B there is shown an illustrative projection of a second crack 51 that is between the first transducer 34 and the second transducer 35. The second crack 51 may be within the beam of the first and second transducers 34-35, and also within the beam of other transducers, for example the beam of the third transducer 33 and the beam of a fourth transducer 36, depending on the size of the respective beams.

In Figure 4C there is shown an illustrative projection of a third crack 52 that is in front of the first, second and third transducers 33-35 and also between them.

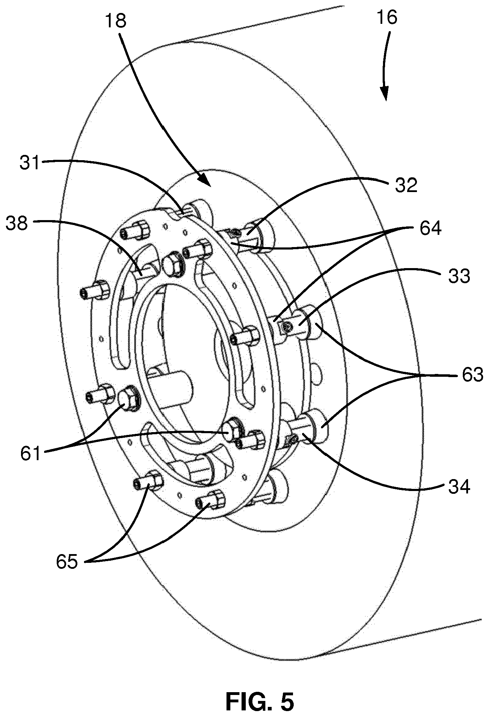

Figure 5 shows a transducer arrangement in accordance with the present disclosure.

A supporting device 60 is attached to an end 18 of a shaft 16 by means of a plurality of screws or bolts 61. The supporting device 60 holds a plurality of transducers 31-38, each of which is attached thereto by means of a holding device 64 and a threaded rod 65. The supporting device 60 and, thus, the plurality of transducers 31-38 rotate together with the shaft 16 around the rotation axis thereof.

Each transducer 31-38 is in contact with the end 18 of the shaft 16 owing to the supporting device 60, the holding device 64 and the threaded rod 65. Accordingly, each transducer 31-38 is coupled to the shaft 16 for emission and detection of ultrasonic pulses. The transducers 31-38 may comprise a protecting device 63 in order to avoid that dirt may get between the transducers and the shaft 16 and to avoid premature aging of a couplant provided therein, something which would negatively impact the ultrasonic coupling.

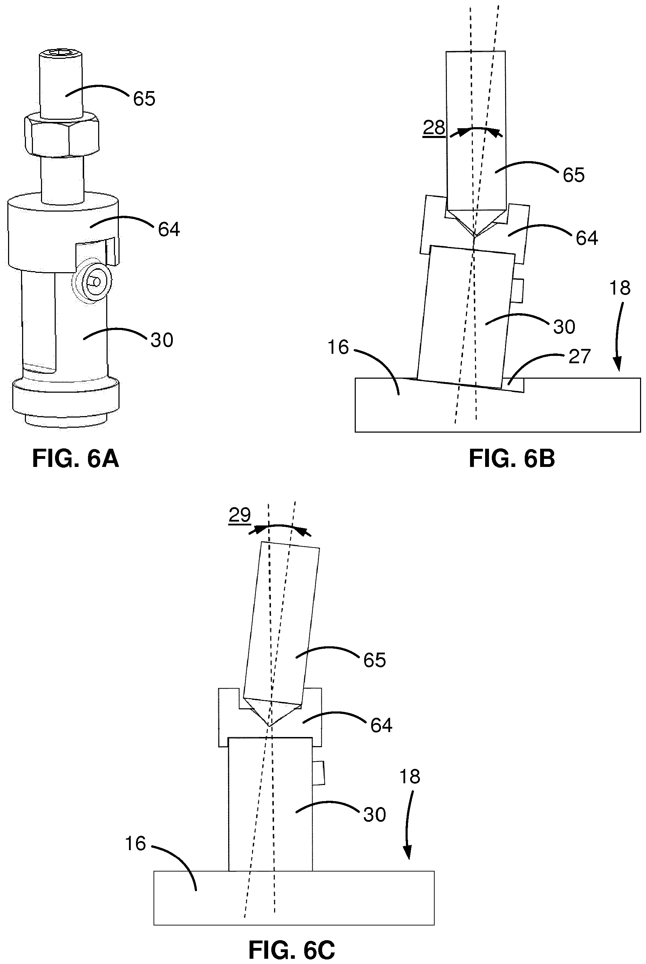

Figure 6A-6B shows a transducer 30 with a pivoting mechanism in accordance with the present disclosure.

As described with reference to Figure 5, the transducers are in contact with a shaft by means of the supporting device 60, but also by means of a holding device 64 and a threaded rod 65 that maintain the transducers between the supporting device 60 and the shaft.

The holding device 64 is adapted to provide a ball-socket joint together with the threaded rod 65 and, thus, the transducer 30 may pivot around the joint. Such pivoting mechanism enhances the contact between the transducer 30 and the surface of the shaft so that, even if said surface is irregular, the transducer 30 may adjust to the irregularity, thereby maintaining a correct ultrasonic coupling.

In Figure 6B is illustrated a cross-section of the transducer 30 with the pivoting mechanism. The transducer 30 is in contact with a surface at an end 18 of a shaft 16.

The surface has a recess 27 that is not parallel to the surface. Without a pivoting mechanism, there would be a gap between the transducer and the shaft 16 due to the recess 27, or the transducer would not be completely perpendicular to the recess 27 and thus the ultrasonic coupling worsens.

The pivoting mechanism, however, keeps the transducer in contact with the surface such that the ultrasonic coupling is maintained. As it can be seen, the threaded rod 65 remains perpendicular to the surface (the portion not having the recess formed therein) owing to its coupling to the supporting device 60 shown in Figure 5. The holding device 64, however, does not remain perpendicular to said surface but is perpendicular to the recess 27, and so does the transducer 30, which is secured to the holding device 64. The angular displacement of the holding device 64 is precisely due to the action of the threaded rod 65. Accordingly, an angle 28 formed between the recess 27 and the remaining part of the surface of the shaft 16 is compensated owing to the pivoting mechanism.

Further, as shown in Figure 6C, in which is illustrated a similar cross-section of the transducer 30 with the pivoting mechanism, the pivoting mechanism may also compensate tolerances of mechanical components that deviate the transducer 30 with respect to the surface 18 of the shaft 16. For example, the supporting device 60 may be deviated with respect to the surface 18 of the shaft 16 owing to manufacturing tolerances or not correct mechanical coupling to the shaft 16, accordingly the threaded rod 65 has a deviation angle 29 with respect to the surface 18, yet the transducer 30 is properly in contact with the surface 18 and, hence, the ultrasonic coupling is not influenced by the deviation.

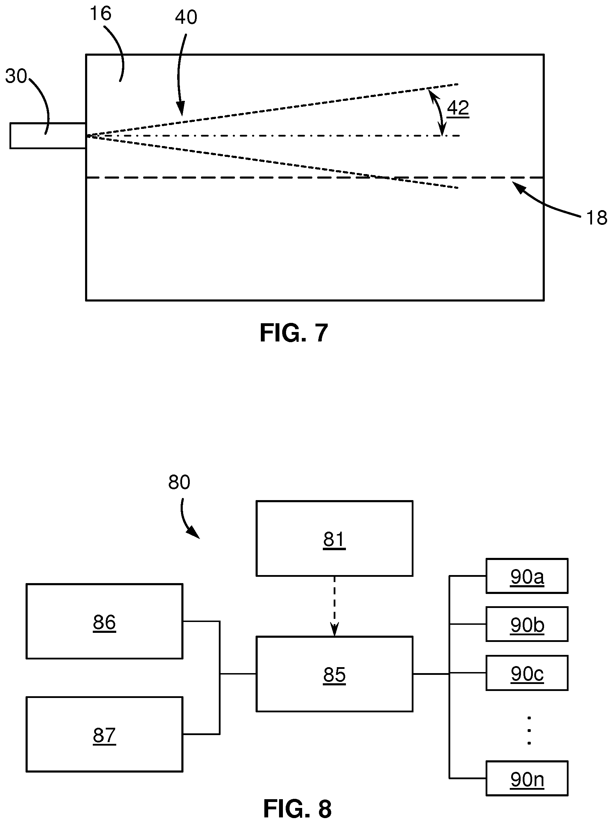

Figure 7 diagrammatically shows, from a top view, a cross-section of a shaft 16 taken across the middle (i.e. the cross-section corresponding to a horizontal plane).

A rotation axis 17 (illustrated with dashed lines) extends in a lengthwise dimension of the shaft 16. A transducer 30 is attached to an end of the shaft 16 in order to emit ultrasonic pulses towards the shaft 16 and detect ultrasonic echo pulses. The transducer 30 features a beam 40 in a far field zone (shown with dashed lines for illustrative purposes only), which has an aperture in function of a half-angle divergence 42, measured from the center to one edge of the beam 40.

Figure 8 diagrammatically shows a system 80 in accordance with an embodiment.

The system 80 comprises at least one processor 81, a plurality of transducers 90a-90n, at least one multiplexer 85 operated by the at least one processor 81, an emission circuitry 86, and a detection circuitry 87.

The at least one processor 81 sequentially operates the different transducers 90a-90n so that only one transducer is working at a time. The at least one processor 81 selects one of the channels, corresponding to the transducers 90a-90n, in the at least one multiplexer 85 so as to electrically connect the selected transducer to the emission circuitry 86 and the detection circuitry 87.

The emission circuitry 86 and the detection circuitry 87 comprise electronics for generating and adjusting the signals of the transducers 90a-90n.

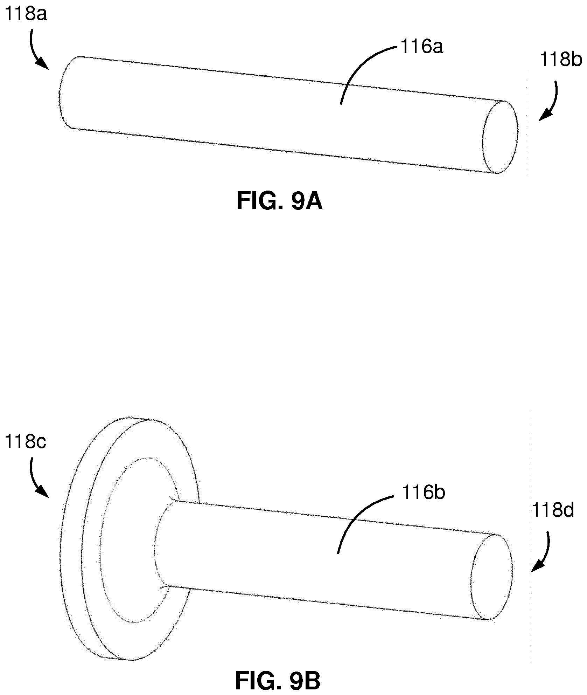

Figures 9A-9B show exemplary shafts of a wind turbine.

In Figure 9A there is shown a first exemplary shaft comprising a body 116a extending between a first end 118a and a second end 118b.

In Figure 9B there is shown a second exemplary shaft comprising a body 116b extending between a first end 118c and a second end 118d. The first end 118c has a diameter larger than a diameter of the body 116b. Accordingly, if a plurality of transducers according to the present disclosure are to be provided at the first end 118c, they have to be arranged close to the rotation axis of the shaft so that the beams of the transducers are provided within the body 116b of the shaft.

Even though the terms first, second, third, etc. have been used herein to describe several devices or elements, it will be understood that the devices or elements should not be limited by these terms since the terms are only used to distinguish one device or element from another. For example, the first plurality of ultrasonic pulses could as well be named second plurality of ultrasonic pulses and the second plurality of ultrasonic pulses could be named first plurality of ultrasonic pulses without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method comprising:

   providing a plurality of transducers at a first end of a shaft of a wind turbine;
   each transducer of the plurality of transducers:

   emitting a first plurality of ultrasonic pulses towards the shaft; and
   detecting the first plurality of ultrasonic pulses that are reflected in the shaft and that the transducer has emitted;

   determining the existence of a crack at least based on at least one ultrasonic pulse of the first plurality of ultrasonic pulses detected by each transducer of the plurality of transducers.

2. The method of claim 1, wherein the plurality of transducers are provided on a surface of the shaft at the first end such that they are evenly spaced around a rotation axis of the shaft.

3. The method of any of the preceding claims, wherein determining the existence of a crack is based on the first plurality of ultrasonic pulses detected by each transducer of the plurality of transducers.

4. The method of any of the preceding claims, wherein determining the existence of a crack comprises:

   comparing a signal amplitude of each ultrasonic pulse of the first plurality of ultrasonic pulses detected by each transducer with one or more predetermined amplitude thresholds;
   computing a first percentage of compared ultrasonic pulses, per each transducer, that exceed at least one of the one or more predetermined amplitude thresholds; and
   determining the existence of the crack based on the counted first percentage for all transducers of the plurality of transducers.

5. The method of any of the preceding claims, wherein the step of determining the existence of the crack further comprises determining a size of an existing crack based on the ultrasonic pulses for determining the existence of the crack.

6. The method of claims 4 and 5, wherein determining the size of the existing crack comprises:

   computing a second percentage of compared ultrasonic pulses, per each transducer and per threshold, that exceed one of the one or more predetermined amplitude thresholds, the one or more predetermined amplitude thresholds at least comprising two predetermined amplitude thresholds; and
   determining the size of an existing crack based on the computed second percentages for all transducers of the plurality of transducers and for all predetermined amplitude thresholds.

7. The method of any of the preceding claims, further comprising repeating: the steps of both emitting and detecting, each transducer of the plurality of transducers, the first plurality of ultrasonic pulses; and the step of determining the existence of the crack; the steps being repeated every time a predetermined amount of time has elapsed from a determination of the existence of the crack.

8. The method of any of the preceding claims, further comprising, after the step of providing the plurality of transducers, attaching each transducer of the plurality of transducers to a surface at the first end of the shaft with a holding device and a threaded rod coupled thereto such that the transducer is pivotable around the holding device.

9. The method of any of the preceding claims, wherein each transducer of the plurality of transducers emits and detects the first plurality of ultrasonic pulses when no other transducer of the plurality of transducers is emitting and detecting the respective ultrasonic pulses.

10. The method of any of the preceding claims, wherein each transducer of the plurality of transducers is adapted to provide ultrasonic pulses with a beam such that a half-angle divergence thereof in a section of the beam is greater than or equal to $1,5°$ and less than or equal to $8,0°$; and wherein the plurality of transducers comprises eight transducers.

11. A system comprising:

   a plurality of transducers adapted to be attached to an end of a shaft of a wind turbine; and
   at least one processor communicatively coupled with each transducer of the plurality of transducers;
   wherein each transducer is configured to emit a first plurality of ultrasonic pulses, and further configured to detect the first plurality of ultrasonic pulses that are reflected and that the transducer emits; and
   wherein the at least one processor is configured to determine the existence of a crack at least based on at least one ultrasonic pulse of the first plurality of ultrasonic pulses detected by each transducer of the plurality of transducers.

12. The system of claim 11, wherein the at least one processor is configured to determine the existence of a crack based on the first plurality of ultrasonic pulses detected by each transducer of the plurality of transducers.

13. The system of any of claims 11-12, wherein the at least one processor is further configured to determine a size of an existing crack at least based on signal amplitude of the detected ultrasonic pulses for determining the existence of the crack.

14. The system of any of claims 11-13, wherein each transducer of the plurality of transducers comprises a holding device and a threaded rod coupled thereto such that the transducer is pivotable around the holding device.

15. The system of any of claims 11-14, further comprising the shaft of the wind turbine; wherein the plurality of transducers are provided on a surface of the shaft at the end such that they are evenly spaced around a rotation axis of the shaft; and wherein each transducer of the plurality of transducers is adapted to provide ultrasonic pulses with a beam such that a half-angle divergence thereof in a section of the beam is greater than or equal to 1,5° and less than or equal to 8,0°.

FIG. 1

FIG. 2

FIG. 3

FIG. 4A

**FIG. 4B**

**FIG. 4C**

**FIG. 5**

**FIG. 6A**

**FIG. 6B**

**FIG. 6C**

**FIG. 7**

**FIG. 8**

118a

116a

118b

**FIG. 9A**

118c

116b

118d

**FIG. 9B**

Europäisches
Patentamt

European
Patent Office

Office européen
des brevets

# EUROPEAN SEARCH REPORT

**Application Number**

EP 18 38 2507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 206396 A (RAILWAY TECHNICAL RES INST) 7 August 1998 (1998-08-07) | 11,15 | INV.<br>G01N29/04 |
| Y | * paragraphs [0020] - [0024]; figures 1-3 * | 2,13,14 | G01H1/16<br>G01N29/11<br>G01N29/22 |
| Y | US 4 102 205 A (PIES WILFRIED ET AL) 25 July 1978 (1978-07-25)<br>* abstract; figure 3 *<br>* column 1, lines 23-68 *<br>* column 3, lines 33-68; figure 3 * | 4,5,9,13 | G01N29/44<br>G10K11/00<br>G01N29/34 |
| Y | US 4 229 796 A (GARRETT STEVEN H) 21 October 1980 (1980-10-21)<br>* abstract; figure 1 *<br>* column 1, lines 42-63 *<br>* column 4, lines 9-13 *<br>* column 5, lines 11-37; figure 1 * | 5,13 | |
| Y | US 4 479 387 A (WAGNER THOMAS A [US] ET AL) 30 October 1984 (1984-10-30)<br>* abstract; figure 1 *<br>* column 2, lines 48-51 *<br>* column 3, lines 61-66; figure 1 * | 8,14 | TECHNICAL FIELDS SEARCHED (IPC) |
| X,D | EP 2 626 558 B1 (SIEMENS AG [DE]) 14 September 2016 (2016-09-14) | 1-3,6,7, 10-12,15 | G01N<br>G01H<br>G10K |
| Y | * abstract; figure 2 *<br>* paragraphs [0006] - [0009]; figure 2 *<br>* paragraphs [0028] - [0029]; figure 2 * | 2,4,5,8, 9,13,14 | |

The present search report has been drawn up for all claims

| Place of search | Date of completion of the search | Examiner |
|---|---|---|
| Munich | 2 October 2018 | Meltaus, Johanna |

## EP 3 594 677 A1

### ANNEX TO THE EUROPEAN SEARCH REPORT
### ON EUROPEAN PATENT APPLICATION NO.

EP 18 38 2507

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2018

| Patent document cited in search report | | Publication date | Patent family member(s) | | Publication date |
|---|---|---|---|---|---|
| JP H10206396 | A | 07-08-1998 | JP | 3157120 B2 | 16-04-2001 |
| | | | JP | H10206396 A | 07-08-1998 |
| US 4102205 | A | 25-07-1978 | DE | 2623522 A1 | 08-12-1977 |
| | | | FR | 2353056 A1 | 23-12-1977 |
| | | | GB | 1524783 A | 13-09-1978 |
| | | | JP | S52143883 A | 30-11-1977 |
| | | | US | 4102205 A | 25-07-1978 |
| US 4229796 | A | 21-10-1980 | JP | S55113952 A | 02-09-1980 |
| | | | US | 4229796 A | 21-10-1980 |
| US 4479387 | A | 30-10-1984 | NONE | | |
| EP 2626558 | B1 | 14-09-2016 | DK | 2626558 T3 | 19-12-2016 |
| | | | EP | 2626558 A1 | 14-08-2013 |

EPO FORM P0459

For more details about this annex : see Official Journal of the European Patent Office, No. 12/82

**EP 3 594 677 A1**

## REFERENCES CITED IN THE DESCRIPTION

**Patent documents cited in the description**

- EP 2626558 B1
- US 8043048 B2